# EUROPEAN PATENT APPLICATION

(11) **EP 4 780 141 A1**
(43) Date of publication of application: **22.07.2026**
(21) Application number: 25226823.0
(22) Date of filing: 23.12.2025
(51) Int. Cl.: H05B 47/12, A63J 17/00, H05B 47/165, H05B 47/155, F21V 33/00, B60Q 3/80

(54) **VEHICLE LIGHTING SYSTEM**

(30) Priority: 27.12.2024 IN 202441103665
(71) Applicant: Harman Becker Automotive Systems GmbH, 76307 Karlsbad (DE)
(72) Inventor: Song, Dishan, 80809 Munich (DE); Portnicki, Wojciech Piotr, 85764 Oberschleißheim, (DE); Oppel, Quirin, 80636 Munich (DE); Baby, Greatin, 682021 Kochi (IN); Andreasen, Kim Fiskbæk, 7480 Vildbjerg (DK); Sandström, Carl Alexander, 7600 Struer (DK)
(74) Representative: Kraus & Lederer PartGmbB

(57) **Abstract**

A method for a vehicle includes outputting, via a loudspeaker, an audio content; providing a lighting effect output via a lighting device based on the audio content; determining an amplitude gradient using a minimum amplitude and a maximum amplitude of the audio content in a past time period, wherein the amplitude gradient includes a plurality of levels; determining a future amplitude of the audio content to be played at a future time; determining a corresponding level of the amplitude gradient that the future amplitude corresponds to; and adjusting the output of the lighting effect using the corresponding level, such that a speed of the output and the corresponding level of the lighting effect are positively correlated.

## Description

### TECHNICAL FIELD

The present disclosure generally relates to a vehicle lighting system. More specifically, the present disclosure relates to a vehicle lighting system adjustable based on an audio content.

### BACKGROUND

Vehicles may be provided with multimedia features to improve the user experience. The multimedia features may include various audio and/or visual elements including loudspeakers, displays, atmosphere lights or the like. Audio contents may be output via one or more loudspeakers located within the vehicle cabin. The atmosphere lighting effect may be enabled by one or more lighting devices within the vehicle cabin.

### SUMMARY

A system includes a controller programmed to adjust a lighting effect output via a lighting device using an audio content being played, wherein a speed to output the lighting effect and an amplitude of the audio content are positively correlated.

A method for a vehicle includes outputting, via a loudspeaker, an audio content; providing a lighting effect output via a lighting device based on the audio content; determining an amplitude gradient using a minimum amplitude and a maximum amplitude of the audio content in a past time period, wherein the amplitude gradient includes a plurality of levels; determining a future amplitude of the audio content to be played at a future time; determining a corresponding level of the amplitude gradient that the future amplitude corresponds to; and adjusting the output of the lighting effect using the corresponding level, such that a speed of the output and the corresponding level of the lighting effect are positively correlated.

A non-transitory computer-readable medium includes instructions, when executed by one or more processors of a vehicle, cause the vehicle to output, via a loudspeaker, an audio content; provide, via a lighting device, a lighting effect output via the lighting device using an audio content; determine an amplitude gradient using a minimum amplitude and a maximum amplitude of the audio content in a past time period, wherein the amplitude gradient includes a plurality of levels; determine a future amplitude of the audio content to be played at a future time; determine a corresponding level of the amplitude gradient that the future amplitude corresponds to; and adjust, via the lighting device, the lighting effect using the corresponding level, such that a speed of the lighting effect and the corresponding level are correlated.

### BRIEF DESCRIPTION OF THE DRAWINGS

For a better understanding of the invention and to show how it may be performed, embodiments thereof will now be described, by way of non-limiting example only, with reference to the accompanying drawings, in which:
Figure 1 illustrates an example block topology of a vehicle system of one or more embodiments of the present disclosure.
Figure 2 illustrates an example diagram of a lighting device of one or more embodiments of the present disclosure.
Figures 3A and 3B illustrate waveform diagrams of an audio of one or more embodiments of the present disclosure.
Figure 4 illustrates a flow diagram of a process for operating the lighting device of one or more embodiments of the present disclosure.
Figure 5 illustrates a schematic diagram of an example involving multiple lighting effect layers of one or more embodiments of the present disclosure.

### DETAILED DESCRIPTION

Embodiments are described herein. It is to be understood, however, that the disclosed embodiments are merely examples and other embodiments may take various and alternative forms. The figures are not necessarily to scale. Some features could be exaggerated or minimized to show details of particular components. Therefore, specific structural and functional details disclosed herein are not to be interpreted as limiting, but merely as a representative basis for teaching one skilled in the art.

Various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

The present disclosure proposes, among other things, a vehicle lighting system. More specifically, the present disclosure proposes a vehicle lighting system adjustable based on one or more audio contents.

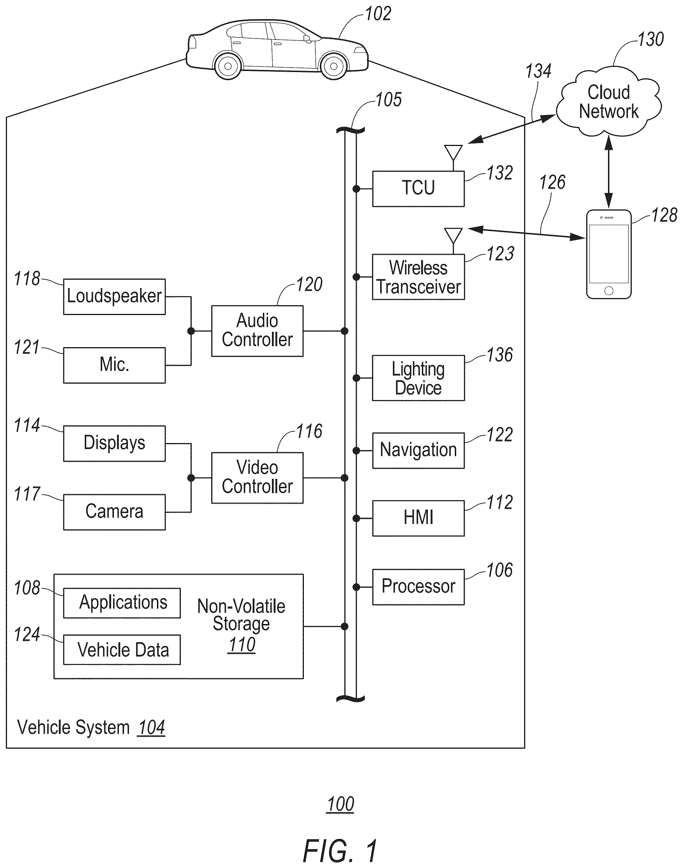

Referring to Figure 1, an example block topology of a system 100 of one embodiment of the present disclosure is illustrated. A vehicle 102 may include various types of automobiles, crossover utility vehicle (CUV), sport utility vehicle (SUV), truck, recreational vehicle (RV), boat, plane, or other mobile machine for transporting people or goods. In many cases, the vehicle 102 may be powered by an engine. As another possibility, the vehicle 102 may be a battery electric vehicle (BEV), a hybrid electric vehicle (HEV) powered by both an internal combustion engine and one or more electric motors, such as a series hybrid electric vehicle (SHEV), a plug-in hybrid electric vehicle (PHEV), a parallel/series hybrid vehicle (PSHEV), or a fuel-cell electric vehicle (FCEV). It should be noted that the illustrated system 100 is merely an example, and more, fewer, and/or differently located elements may be used.

As illustrated in Figure 1, the vehicle 102 may be provided with a vehicle system 104 including one or more processors 106 configured to perform instructions, commands, and other routines in support of the processes described herein. For instance, the vehicle system 104 may be configured to execute instructions of applications 108 to provide features such as vehicle operation controls, multimedia, or the like. Such instructions and other data may be maintained in a nonvolatile manner using a variety of types of computer-readable storage medium 110. The computer-readable medium 110 (also referred to as a processor-readable medium or storage) includes any non-transitory medium that participates in providing instructions or other data that may be read by the processor 106 of the vehicle system 104. Computer-executable instructions may be compiled or interpreted from computer programs created using a variety of current and future programming languages and/or technologies.

The vehicle system 104 may be provided with one or more in-vehicle networks 105 configured to enable the communication between various components of the vehicle 102. The in-vehicle network 105 may be configured to support various communication protocol. For instance, the in-vehicle network 105 may be configured to support, but is not limited to, one or more of a controller area network (CAN), an Ethernet network, and a media-oriented system transport (MOST), as some examples. Furthermore, the in-vehicle network 105, or portions of the in-vehicle network 105, may be a wireless network accomplished via Bluetooth low-energy (BLE), Wi-Fi, ultrawide-band (UWB) or the like.

The vehicle system 104 may be provided with various features allowing the vehicle users to interface with the vehicle system 104. For example, the vehicle system 104 may receive input from human machine interface (HMI) controls 112 connected to the in-vehicle network 105 and configured to provide for user interaction with the vehicle 102. As an example, the vehicle system 104 may interface with one or more buttons, switches, knobs, touch screen or other HMI controls configured to invoke functions on the vehicle system 104 (e.g., navigation, audio/video playback, and etc.).

Any number of controllers (shown or not shown) within the vehicle system 104 may also drive or otherwise communicate with one or more displays 114 configured to provide visual output to vehicle users by way of a video controller 116 through the in-vehicle network 105. In some cases, the displays 114 may include a touch screen further configured to receive user touch input via the video controller 116, while in other cases the displays 114 may include screens only, without touch input capabilities. In addition, any number of controllers of the vehicle system 104 may also drive or otherwise communicate with one or more cameras 117 configured to provide video input by way of the video controller 116 through the in-vehicle network 105. The cameras 117 may include one or more interior cameras configured to capture images/videos inside the vehicle cabin. Additionally or alternatively, the cameras 117 may include one or more exterior cameras configured to capture images/videos outside the vehicle 102.

Any number of controllers within the vehicle system 104 may also drive or otherwise communicate with one or more loudspeakers 118 configured to provide audio output to vehicle users by way of an audio controller 120 through the in-vehicle network 105. Any number of controllers within the vehicle system 104 may also drive or otherwise communicate with one or more microphones 121 configured to receive an audio input by way of the audio controller 120 through the in-vehicle network 105.

The vehicle system 104 may also be provided with navigation and route planning features through a navigation controller 122 connected to the in-vehicle network 105 and configured to calculate navigation routes responsive to user input via e.g., the HMI controls 112, and output planned routes and instructions via the loudspeaker 118 and/or the display 114 through the audio controller 120 and/or the video controller 116. Location data that is needed for navigation may be determined by the communication with multiple satellites. Map data used for route planning may be stored in the storage 110 as a part of the vehicle data 125. Navigation software may be stored in the storage 110 as one of the vehicle applications 108.

The vehicle system 104 may also be provided with wireless communication capabilities via a wireless transceiver 123 connected to the in-vehicle network 105 and configured to wirelessly communicate with a mobile device 128 of vehicle users via a wireless connection 126. The mobile device 128 may be any of various types of portable computing devices, such as cellular phones, tablet computers, wearable devices, smart watches, laptop computers, portable music players, or other device capable of communication with the vehicle system 104. The wireless transceiver 123 may be configured to support a variety of wireless communication protocols including Wi-Fi, Bluetooth, radio-frequency identification (RFID), near-field communication (NFC), and communicate with a compatible wireless transceiver (not shown) of the mobile device 128 to enable various functions. For instance, the vehicle user may perform audio and/or video phone calls by mobile device 128 through the vehicle system 104. Additionally or alternatively, the vehicle system 104 may be configured to access a cloud network 130 via the mobile device 128 through wireless connection technologies such as cellular network.

The vehicle system 104 may also be provided with a telematics control unit (TCU) 132 connected to the in-vehicle network 105 and configured to control telecommunication between vehicle 102 and the cloud network 130 through a wireless connection 134 (e.g., using a modem) in addition to or in lieu of via the mobile device 128. For instance, the vehicle system 104 may download and/or upload data from/to the cloud network 130 via the TCU 132 or through the mobile device 128. It is noted that the term cloud network is used as a general term in the present disclosure and may include any computing network involving servers, carriers, routers, computers, controllers, circuitry or the like configured to store data and perform data processing functions and facilitate communication between various entities.

The vehicle system 104 may also be provided with one or more lighting devices 136 connected to the in-vehicle network 105 and configured to provide lighting effects corresponding to various atmospheres. The lighting devices 136 may include various lighting elements located inside the vehicle cabin. For instance, the lighting devices 136 may include one or more of an instrument panel light located at an instrument panel, a door light located on a vehicle door, a speaker light located at the loudspeaker 118, and/or a footwell light located at a footwell of the vehicle 102. Additionally or alternatively, the lighting devices 136 may include one or more lighting elements that is exterior to the vehicle 102 and configured to provide the lighting effects externally. In one or more examples, the exterior lighting elements may be completely or partially implemented via one or more of the head light, the tai light, and/or the turn signal lights of the vehicle 102.

The lighting devices 136 may be implemented in various manners. In one or more examples, the lighting devices 136 may include one or more light-emitting diodes (LEDs) configured to output light in one or more colors. The LEDs may include a color LED configured to produce different colors of light, which may be achieved by using a combination of red, green and blue (RGB) LEDs. Additionally or alternatively, the lighting devices 136 may include one or more liquid crystal displays (LCDs) including a plurality of pixels and configured to output the lighting effects.

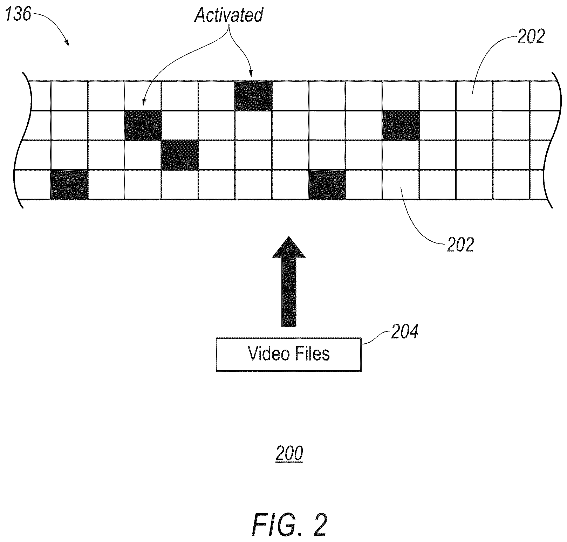

Referring to Figure 2, an example diagram of a lighting device of one or more embodiments of the present disclosure is illustrated. With continuing reference to Figure 1, the lighting device 136 in the present example is in the form of a light strip. It is noted that although the lighting device 136 is implemented as a light strip in the present example, the present disclosure is not limited thereto and the lighting device 136 may be implemented into various shape and/or forms. In one or more examples, the lighting device 136 may be implemented as a circular shape (e.g., around a round speaker), a curved shape, an irregular shape or the like.

As illustrated with reference to Figure 2, the lighting device 136 may include a plurality of pixels 202. In case of the lighting device 136 is an LCD, the LCD lighting device 136 inherently includes a plurality of pixels 202 configured to display various visual images and/or effects. Alternatively, in case of the lighting device 136 is implemented via LEDs, each LED element may form a pixel 202. Each pixel 202 of the lighting device 168 may be collectively or individually controlled by the computing system 104 such that the lighting device 168 may provide various lighting effects.

The lighting effects may be classified as themes configured to resemble different atmospheres. In one or more examples, the lighting effects may include a default theme with balanced output for the lighting effect. Additionally or alternatively, the lighting effects may include a mountain serenity theme configured to resemble a scenario mountain serenity visual user interface (UI) design. Additionally or alternatively, the lighting effects may include a metropolitan buzz theme configured to resemble a scenario metropolitan buzz visual UI design. Additionally or alternatively, the lighting effects may include pacific whisper theme configured to resemble a pacific whisper visual UI design. Additionally or alternatively, the lighting effects may include a relax theme configured to resemble a scenario relax visual UI design. Additionally or alternatively, the lighting effects may include an energize theme configured to resemble a scenario energize visual UI design. Additionally or alternatively, the lighting effects may include a focus theme configured to resemble a scenario focus visual UI design.

The vehicle user may select and configure one or more of the above themes via the HMI controls 112 of the computing system 104. Additionally or alternatively, the user may select and configure one or more of the above themes via the mobile device 128 and/or through the cloud network 130 (e.g., in a remote manner). The various themes of the lighting effects as output by the lighting devices 136 may be enabled and provided as one or more video files 204 stored in the storge 110 as a part of the vehicle data 124. The video files 204 may include instruction data configured to operate the lighting devices 136 to provide the lighting effects corresponding to different themes. For instance, the video files 204 may include instruction data indicative of the activation and deactivation of the one or more pixels 202 at one or more predefined timing, color and/or intensity to resemble the themed lighting effects. For instance, the video file 204 corresponding to the pacific whisper theme may include the instruction data indicative of a video pattern that primarily includes blue color pixels with a gentle wave animation to resemble a sea wave atmosphere. In contrast, the video file 204 corresponding to the energize theme may include the instruction data indicative of another video pattern that primary includes red color pixels with a fast-moving animation to resemble an energetic atmosphere. The video files 204 may be associated with a limited duration (e.g., 30 seconds) and played in a looped manner to provide continuous lighting effects to the user.

The present disclosure proposes a system and method for adjusting the lighting effects based on the audio content played via the loudspeakers 118 to improve the experience of the of the vehicle users. More specifically, the present disclosure adjusts frame of the video files 204 such that playback speed of the lighting effects and the amplitude of the audio content is positively correlated. For instance, a louder audio content (higher volume amplitude) may be associated with a faster lighting effect playing speed, and a quieter audio content (lower volume amplitude) may be associated with a slower lighting effect playing speed.

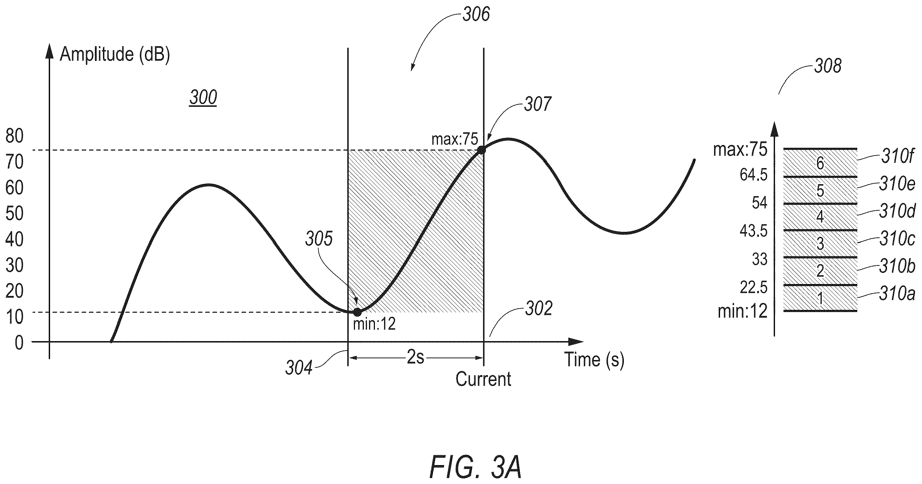

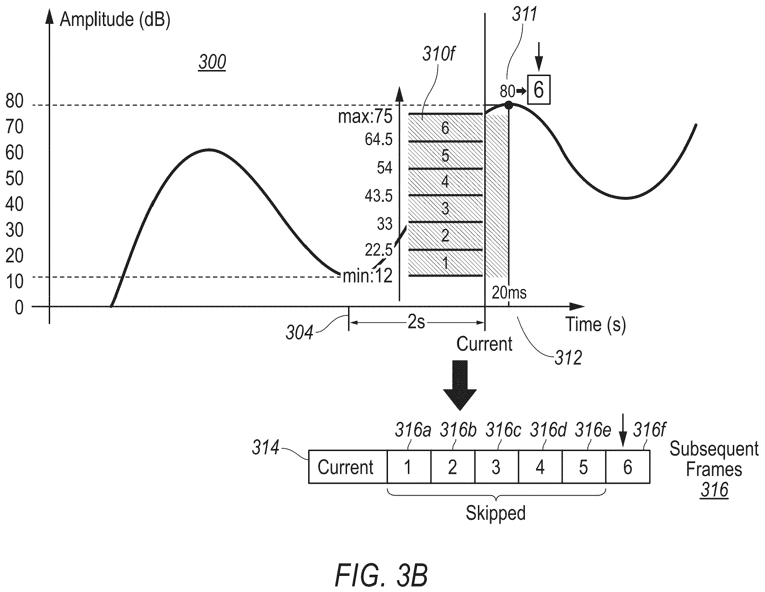

To better demonstrate the present disclosure, Figures 3A and 3B illustrate waveform diagrams 300 of the audio content of one or more embodiments of the present disclosure. With continuing reference to Figures 1 and 2, the audio content being played may be stored in the storage 110 as a part of the vehicle data 124. Additionally or alternatively, the audio content may be stored in the mobile device 128 and/or the cloud network and wirelessly streamed to the vehicle system 104.

Referring to Figure 3A, the waveform diagram 300 is representative of the audio content being played by the vehicle system 104. The horizontal axis x is representative of the time in units of seconds and the vertical axis y is representative of the amplitude of the audio content in units of decibel (dB). The amplitude of the audio content at the current time 302 is 75 dB. In the present example, it is assumed that the amplitude of the audio content both before and after the current time 302 is known to the computing system 104. The present disclosure adjusts the playback speed of the video files 204 by mapping a future amplitude of the audio content at a future time point into an amplitude gradient (amplitude range) 308 defined by a past time period 306, and selecting a subsequent frame of the video files 204 using the amplitude gradient 308, such that a higher future amplitude results in skipping one or more frames of the video files 204 and thus a faster video playback speed.

More specifically, the past time period 306 may be defined between a past time 304 and the current time 302. In the present example, the past time period 306 may be two seconds. However, the present disclosure is not limited thereto, and the past time period 306 may be longer or shorter than two seconds in other examples. In the present example, the minimum amplitude 305 and the maximum amplitude 307 within the past time period 306 is 12 dB and 75 dB respectively. Using the minimum amplitude 305 and maximum amplitude 307, the amplitude gradient 308 may be determined. In the present example, the level gradient may be evenly divided into six levels 310. A first level 310a may be defined from 12 to 22.5 dB. A second level 310b may be defined from 22.5 to 33 dB. A third level 310c may be defined from 33 to 43.5 dB. A fourth level 310d may be defined from 43.5 to 54 dB. A fifth level 310e may be defined from 54 to 64.5 dB. A sixth level 310f may be defined from 64.5 to 75 dB. Alternatively, the first level 310a may be defined as any amplitude that is less than the 22.5 dB, and the six level 310f may be defined as any amplitude that is greater than the 75 dB to include the future amplitude of the future time that is outside the range defined by the minimum amplitude 305 and the maximum amplitude 307.

Each level 310 of the amplitude gradient 308 may correspond to a subsequent frame after the current frame of the video files 204 to be output. For instance, the video files 204 may be configured to with a predefined frame rate (e.g., 30 frames per second). By default, the video files 204 may be played at a frame-by-frame basis without skipping any frame. The amplitude gradient 308 may be used by the vehicle system 104 to select and/or skip frames to provide an accelerated playback effect. For instance, if the first level 310a (value "1") is selected, the vehicle system 104 may selects the first subsequent frame after the current frame of the vehicle files 204 for output. In this case, no frame is skipped. Alternatively, if the third level 310c (value "3") is selected, the vehicle system 104 may directly select the third subsequent frame after the current frame of the vehicle files 204 for output, such that the first and second subsequent frames are skipped. Since two frames are skipped, the lighting effects output via the lighting device 136 appears faster compared with the first case when no frame is skipped. In a further alternative example, if the sixth level 310f (value "6") is selected, the vehicle system 104 may directly select the sixth subsequent frame after the current frame of the vehicle files 204 for output, such that the first to fifth subsequent frames (totally five frames) are skipped. Skipping five frames may make the lighting effects appear faster compared with both the first and second cases. In other words, if the selected level number is n, the (n-1) frames immediately after the current frame will be skipped.

It is noted that although there are totally six levels 310 of the amplitude gradient 308 used in the present example, the present disclosure is not limited thereto. More or less numbers of levels may be used in other examples.

Referring to Figure 3B, the vehicle system 104 may determine a future amplitude 311 of the audio content at a predetermined future time 312 for mapping into the amplitude gradient 308. In the present example, the future time 312 may be defined as 20ms after the current time, and the future amplitude 311 at the future time 312 may be determined as 80 dB. As discussed above, the 80 dB amplitude may be mapped with the six level 310f of the amplitude gradient 308 (greater than 64.5 dB). Therefore, the six level 310f corresponding to the sixth subsequent frame 316f after the current frame 314 of the video files 204 is selected in the present example. Thus, the five frames 316a, 316b, 316c, 316d, 316e of the video files 204 immediately after the current frame 314 output at the current time 302 are skipped. The lighting device 136 will directly display the sixth subsequent frame 316f of the video files 204. The skipping of the frames 316a, 316b, 316c, 316d, 316e may provide a visual effect accelerating the display of the themed light effects. For instance, the wave animation associated with the pacific whisper theme may appear to move faster.

The process described herein may be repeated at a predetermined interval (e.g., every 20 ms) such that the speed of the lighting effect may be continuously adjusted.

It is noted that although the amplitude gradient 308 includes six levels corresponding to the six subsequent frames 316, the present disclosure is not limited thereto. Different numbers of levels and thus subsequent frames 316 may be used in other examples based on different design needs.

In one or more examples, the video files 204 may include lighting effects with a plurality of layers. For instance, a lighting effect may include a background layer configured to provide a static or near-static background theme with predefined color, and a dynamic layer on top of the background layer and configured to provide dynamic visual effects based on the themes. Continuing with the above pacific whisper theme for instance, the background layer may be configured to provide a general blue color as a background that resembles a seawater atmosphere, and the dynamic layer may be configured to provide a wave pattern that resembles moving sea waves on top of the blue color background. In the event that multiple layers are provided, the video frame operation described above with reference to Figures 3A and 3B may be applied to one or more of the layers. For instance, the vehicle system 104 may skip frames on the dynamic layer while the background layer is not modified.

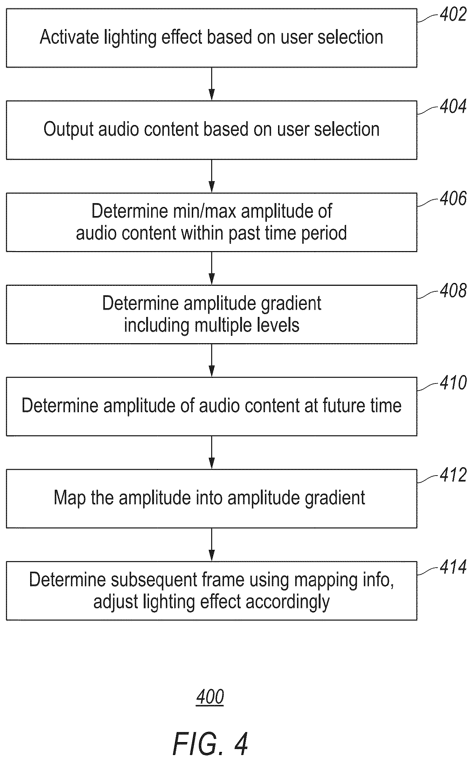

Referring to Figure 4, a flow diagram of a process 400 for operating the lighting device of one or more embodiments of the present disclosure is illustrated. With continuing reference to Figures 1 to 3, the process 400 may be completely and/or partially implemented via the vehicle system 104. For simplicity, the following description will be made with reference to the vehicle system 104.

At operation 402, the vehicle system 104 activates the lighting device 136 to provide the one or more lighting effects based on the user input. The user input may be received via the HMI controls 112. Additionally or alternatively, the user input may be received via the mobile device 128 and/or the cloud network 130. The user input may include a selection of one or more of the predefined themes. The user input may further include instructions to activate and/or deactivate one or more of the lighting devices 136. The vehicle system 104 may be provided with a plurality of lighting devices at various locations of the vehicle 102. The users may activate all or some of the lighting devices 136 based on their preference. For instance, the user input may be indicative activation of the lighting devices 136 at the passenger seat only without activating the lighting devices 136 for the driver.

At operation 404, the vehicle system 104 outputs the audio content based on the user input. Similarly, the user input may be located received via the HMI controls 112 and/or remotely received via the mobile device 128 and/or the cloud network 130. The audio content may be played via one or more of the loudspeakers 118. Additionally or alternatively, the audio content may be output via one or more outputting devices such as the mobile device 128 and/or a headphone (not shown) connected to the vehicle system 104 in a wireless or wired manner. The audio content may be from various sources. For example, the audio content may include one or more digital files stored in the storage 110 as a part of the vehicle data 124. Additionally or alternatively, the audio content may be received via radio receiver (not shown) in support of various radio protocols such as amplitude modulation (AM), frequency modulation (FM), satellite radio or the like. Additionally or alternatively, the audio content may be received from the mobile device 128 and/or the cloud network 130.

At operation 406, the vehicle system 104 determines the minimum amplitude 305 and the maximum amplitude 307 of the audio content within the past time period 306. The past time period 306 may be a predetermined time period (e.g., 2 seconds) immediately before the current time 302. In one or more examples, the past time period may differ depending on theme selected. A first theme may be associated with a first past time period, and a second theme may be associated with a second past time period that is different from the first past time period in length. Additionally or alternatively, the vehicle system 104 may allow the user to customize the past time period by user input received via the HMI controls 112, the mobile device 128 and/or the cloud network 130 (e.g., adjusting the length).

At operation 408, the vehicle system 104 determines the amplitude gradient 308 having a plurality of levels 310 using the minimum amplitude 305 and the maximum amplitude 307. More specifically, the vehicle system 104 determines the range of each level 310 of the amplitude gradient 308. The number of the levels 310 may be predetermined (e.g., six levels in the examples illustrated with reference to Figure 3). In one or more examples, the number of the levels 310 may differ depending on theme selected. A first theme may be associated with a first number of levels 310, and a second theme may be associated with a second number of levels 310 that is different from the first number. Additionally or alternatively, the vehicle system 104 may allow the user to customize the number of levels 310 by user input received via the HMI controls 112, the mobile device 128 and/or the cloud network 130.

At operation 410, the vehicle system 104 determines the future amplitude 311 of the audio content at the future time 312. As discussed above, the audio content is known to the vehicle system 104 and therefore the future amplitude 311 may be determined. In the event that the audio content is remotely received in a real time manner (e.g., via radio), the vehicle system 104 may be configured to buffer the audio content to provide the output in a delayed manner (e.g., for several milliseconds). In this way, the audio content being played at the current time 302 is delayed and the audio content to be played at the future time 312 may still be determined by the vehicle system 104. The future time 312 may be predetermined time after the current time 302 (e.g., 20 ms). In one or more examples, the further time 312 may differ depending on theme selected. A first theme may be associated with future time, and a second theme may be associated with a future time that is different from the first future time. Additionally or alternatively, the vehicle system 104 may allow the user to customize the future time 312 by user input received via the HMI controls 112, the mobile device 128 and/or the cloud network 130.

At operation 412, the vehicle system 104 maps the future amplitude 311 of the audio content at the future time 312 into the amplitude gradient 308 to determine which level 310 the future amplitude corresponds to. A corresponding level 310 may be determined.

At operation 414, the vehicle system 104 determines a corresponding frame 316 subsequent to the current frame 314 of the video files 204 using the corresponding level 310 of the amplitude gradient. With the corresponding frame determined, the vehicle system 104 adjusts the lighting effect output via the lighting devices 136 using the corresponding frame. For instance, if the future amplitude 311 corresponds to the fourth level 310d of the amplitude gradient 308 including six gradients in total, the fourth frame 316d subsequent to the current frame 314 will be determined as the corresponding frame. Therefore, the vehicle system 104 may skip the three frames 316a, 316b, 316c after the current frame 314 and directly display the fourth frame 316d of the video files 204 to resemble an accelerated lighting effect as output via the lighting devices 136.

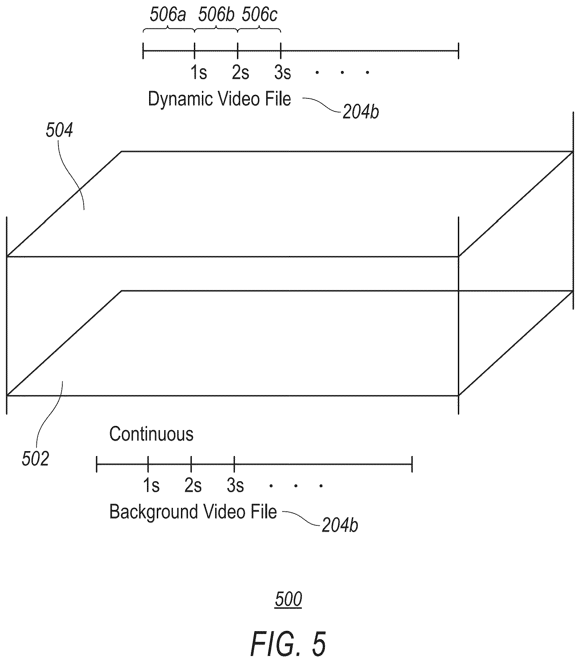

In one or more alternative embodiments, the video files 204 may include lighting effects with a plurality of layers. Referring to Figure 5, a schematic diagram of a lighting effect including a plurality of layers of one or more embodiments of the present disclosure is illustrated. In the present example, the lighting effect may include a background layer 502 configured to provide a static or near-static background theme with one or more predefined colors and/or patterns, and a dynamic layer 504 displayed on top of the background layer and configured to provide dynamic visual effects based on the themes. The background layer 502 may be configured to output one or more background video files 204a, and the dynamic layer 504 may be configured to output one or more dynamic video files 204b.

Responsive to activating the lighting effects of the vehicle system 104, the background video files 204a may be continuously played at the background layer 502. In contrast, In the present example, the dynamic layer 504 may be configured to only play the video files 204 in response to one or more predefined conditions being met. There are various examples for the predefined conditions. As a few non-limiting examples, the predefined conditions may include a bass beat indicative of the frequency of the audio content being below a low frequency threshold and the amplitude of the audio content being above an amplitude threshold. Additionally or alternatively, the predefined conditions may include a high-pitch indicative of the frequency of the audio content being above a high frequency threshold and the amplitude of the audio content being above an amplitude threshold. Additionally or alternatively, the predefined conditions may include a metronome condition indicative of a repetition pattern of one or more sound conditions (e.g., the bass beat, or the high pitch) separated by a predefined time interval such that a continuous occurrence of the one or more sound conditions may not trigger the output of the dynamic video file 204b. For instance, if the predefined condition occurs continuously with insufficient time interval therebetween, the dynamic layer will not be activated. The system may refrain from outputting the dynamic layer video in response to detecting the time interval is below a duration threshold.

The dynamic video file 204b may be defined into one or more sections 506 each corresponding to a time duration. In the present example, the dynamic video file 204b may include from a first section 506a from 0 to 1 second; a second section 506b from 1 second to 2 second; a third section 506c from 2 second to 3 second; and etc. Each section 516a may be associated with a video that is in contrast with the background video file 204 to provide a dynamic visual effect. For instance, if the background video file 204a provides a background video that is mostly in dark color (e.g., black, dark blue), the sections 506 of the dynamic video file 204b may provide one or more pixels in light color (e.g., white) overlaid on top of the background layer 502. Each section 506 may be associated with a different dynamic video in terms of pixels to be activated, color, and/or brightness. The section 506 only designates one or more pixels to activate. For those pixels that are not designated for activate, the background video file 204a will output unchanged.

In one or more examples, the one or more sections 506 of the dynamic video files 204b may be associated with a gradual fading effect. For instance, responsive to detecting the predefined condition is met (e.g., a bass beat), the computing system 104 may randomly select a section 506 to directly activate the predefined pixel to a predefined brightness at the beginning of the section 506. The brightness of the activated pixels is gradually reduced throughout the duration of the section 506 until the end of the section 506 when the activated pixels of section 506 is deactivated and switch back to the color and brightness of the background video file 204a.

It is noted that although each section 506 of the dynamic video file 204b is associated with the same length in the example discussed above, the present disclosure is not limited thereto. In an alternative example, the sections 506 may be associated with different lengths. Additionally or alternatively, different sections 506 may be selected in response to detecting different predefined conditions. As an example, responsive to detecting a first condition (e.g., bass beat), the vehicle system 104 may select the first section 506a for output on the dynamic layer 504; and responsive to detecting a second condition (e.g., high-pitch), the vehicle system 104 may select the second section 506b for output on the dynamic layer 504.

It is recognized that the controllers as disclosed herein may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, such controllers as disclosed utilizes one or more microprocessors to execute a computer-program that is embodied in a non-transitory computer readable medium that is programmed to perform any number of the functions as disclosed. Further, the controller(s) as provided herein includes a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller(s) as disclosed also include hardware-based inputs and outputs for receiving and transmitting data, respectively from and to other hardware-based devices as discussed herein.

While exemplary embodiments are described above, it is not intended that these embodiments describe all possible forms encompassed by the claims. The words used in the specification are words of description rather than limitation, and it is understood that various changes may be made without departing from the spirit and scope of the disclosure. The words processor and processors may be interchanged herein, as may the words controller and controllers.

As previously described, the features of various embodiments may be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics may be compromised to achieve desired overall system attributes, which depend on the specific application and implementation. These attributes may include, but are not limited to strength, durability, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and may be desirable for particular applications.

## Claims

1. A system comprising:
a controller programmed to adjust a lighting effect output via a lighting device using an audio content being played, wherein a speed to output the lighting effect and an amplitude of the audio content are positively correlated.

2. The system of claim 1, wherein the controller is further programmed to:
determine an amplitude gradient using a minimum amplitude and a maximum amplitude of the audio content in a past time period, wherein the amplitude gradient includes a plurality of levels;
determine a future amplitude of the audio content to be played at a future time; and
determine a corresponding level of the amplitude gradient that the future amplitude corresponds to.

3. The system of claim 2, wherein the lighting effect includes a plurality of frames, and the controller is further programmed to:
select a subsequent frame to be output via the lighting device using the corresponding level.

4. The system of claim 3, wherein the controller is further programmed to:
skip one or more frames before the selected subsequent frame.

5. The system of any of claims 2 to 4, wherein the corresponding level is n, the lighting effect includes at least n frames, and the controller is further programmed to:
select an nth subsequent frame to be output by skipping n-1 frames before the nth subsequent frame.

6. The system of any of claims 2 to 5, wherein a first lighting effect is associated with a first number of levels of the amplitude gradient, and a second lighting effect is associated with a second number of levels of the amplitude gradient different from the first number.

7. The system of any preceding claim, wherein the lighting effect includes a background video and a dynamic video, the controller is further programmed to:
continuously display the background video; and
responsive to detecting a predefined audio condition is met, display the dynamic video.

8. The system of claim 7, wherein the predefined audio condition is at least one of: a bass beat sound, and a high pitch sound.

9. The system of claim 7 or 8, wherein the controller is further programmed to:
responsive to detecting the predefined condition occurs a plurality of times each within a time threshold from an adjacent occurrence, refrain from outputting the dynamic video.

10. A method for a vehicle, comprising:
outputting, via a loudspeaker, an audio content;
providing a lighting effect output via a lighting device based on the audio content;
determining an amplitude gradient using a minimum amplitude and a maximum amplitude of the audio content in a past time period, wherein the amplitude gradient includes a plurality of levels;
determining a future amplitude of the audio content to be played at a future time;
determining a corresponding level of the amplitude gradient that the future amplitude corresponds to; and
adjusting the output of the lighting effect using the corresponding level, such that a speed of the output and the corresponding level of the lighting effect are positively correlated.

11. The method of claim 10, wherein the lighting effect includes a plurality of frames, the method further comprising:
selecting a subsequent frame to be output using the corresponding level by skipping one or more frames before the subsequent frame as selected.

12. The method of claim 11, wherein the number of frames that are skipped depends on the corresponding level.

13. The method of claim 11 or 12, wherein a first lighting effect is associated with a first number of levels of the amplitude gradient, and a second lighting effect is associated with a second number of levels of the amplitude gradient different from the first number.

14. The method of any of claims 11 to 13, wherein the lighting effect includes a background video and a dynamic video, the method further comprising:
continuously displaying the background video; and
responsive to detecting a predefined audio condition is met, displaying the dynamic video, and preferably
responsive to detecting the predefined condition occurs a plurality of times each within a time threshold from an adjacent occurrence, refraining from outputting the dynamic video.

15. A non-transitory computer-readable medium comprising instructions, when executed by one or more processors of a vehicle, cause the vehicle to:
output, via a loudspeaker, an audio content;
provide, via a lighting device, a lighting effect output via the lighting device using an audio content;
determine an amplitude gradient using a minimum amplitude and a maximum amplitude of the audio content in a past time period, wherein the amplitude gradient includes a plurality of levels;
determine a future amplitude of the audio content to be played at a future time;
determine a corresponding level of the amplitude gradient that the future amplitude corresponds to; and
adjust, via the lighting device, the lighting effect using the corresponding level, such that a speed of the lighting effect and the corresponding level are correlated.
